**Europäisches Patentamt**

**European Patent Office**

**Office européen des brevets**

(19)

(11) Publication number : **0 046 027 B2**

# (12) NEW EUROPEAN PATENT SPECIFICATION

(45) Date of publication of the new patent specification : **06.05.92 Bulletin 92/19**

(51) Int. Cl.⁵ : **H01R 4/70,** B29C 69/00

(21) Application number : **81303440.2**

(22) Date of filing : **27.07.81**

(54) **Process for the production of a heat recoverable article.**

(30) Priority : **28.07.80 GB 8024623**
**02.04.81 GB 8110397**

(43) Date of publication of application :
**17.02.82 Bulletin 82/07**

(45) Publication of the grant of the patent :
**12.11.86 Bulletin 86/46**

(45) Mention of the opposition decision :
**06.05.92 Bulletin 92/19**

(84) Designated Contracting States :
**AT BE CH DE FR IT LI NL SE**

(56) References cited :
**DE-A- 1 547 057**
**DE-A- 2 525 278**
**DE-B- 1 032 135**
**DE-U- 7 612 791**
**FR-A- 2 004 578**
**FR-A- 2 114 005**
**FR-A- 2 286 528**
**FR-A- 2 374 463**
**FR-A- 2 444 392**

(56) References cited :
**GB-A- 1 046 367**
**GB-A- 1 178 166**
**GB-A- 2 025 157**
**US-A- 3 022 543**
**US-A- 3 949 110**

(73) Proprietor : **RAYCHEM LIMITED**
**Rolls House 7, Rolls Buildings Fetter Lane**
**London, EC4 1NL (GB)**

(72) Inventor : **Changani, Pushpkumar**
**Ila Dores Road**
**Upper Stratton Swindon Wiltshire (GB)**
Inventor : **Peacock, Donald George**
**Paradise Cottage**
**Kempsford Gloucestershire (GB)**
Inventor : **Roberts, David**
**Stonestack 10, Crabtree Drive**
**Givons Grove Leatherhead Surrey (GB)**
Inventor : **Davis, Frederick James**
**10, Belsay**
**Toothill Swindon Wiltshire (GB)**

(74) Representative : **Jay, Anthony William et al**
**Raychem Limited Intellectual Property Law**
**Department Faraday Road**
**Dorcan Swindon Wiltshire (GB)**

EP 0 046 027 B2

## Description

The present invention concerns heat-recoverable polymeric articles, especially hollow articles, the dimensional configuration of which may be made to change by subjecting to heat, and in particular, a process for the manufacture of such articles.

Hitherto, hollow heat-recoverable articles have generally been produced by forming a polymer into the desired heat stable configuration, simultaneously or subsequently cross-linking the polymer in its heat stable configuration, heating the article to a temperature above the crystalline melting point or softening point of the cross-linked polymer, deforming the article and cooling the article whilst in the deformed state so that the deformed configuration is retained. In use, since the deformed state of the article is heat unstable, application of heat will cause the article to revert or tend to revert to its original heat stable configuration.

When hollow articles are of such configuration that they cannot be produced directly by extrusion, for example electrical boots, udders (a term employed herein in a general sense to cover any hollow heat shrinkable article comprising at least three outlets employed in the termination of electrical cables and also in cable "breakouts") or end-caps (a hollow tubular article having a smoothly tapering sealed end) for electric cables, then hitherto such articles have generally been formed into the desired heat stable configuration on an item-by-item basis by moulding, e.g. by injection, compression or transfer moulding techniques.

Quite apart from the added expense of such techniques, for complicated shapes, e.g. udders, distortion may be necessary to remove the articles from the moulding pin or core requiring that the articles be resiliently deformable. Furthermore, in order to render such articles heat-recoverable, such moulded parts have in general hitherto been heated and deformed into a heat unstable configuration on an item-by-item basis.

It is known to form heat-recoverable electrical articles by welding together and then cross-lining portions of suitable polymer tubes or sheets, again followed by heating and deformation to produce the heat-unstable configuration, for example as described in British Patents 1046367 and 1334556. Such hot deformation of the finished article is inconvenient and gives rise to a number of practical difficulties.

It is an object of the present invention to provide a process of producing heat-recoverable articles which eliminates the need for deformation of the finished article to render it heat-recoverable and obviates or reduces the above-mentioned difficulties.

Accordingly, the present invention provides a process for the production of a heat-recoverable boot, udder or end cap for electrical purposes having a thickness of at least 0.1 millimetre which comprises:

(a) providing a first body of fusion bondable polymeric material having gel content as measured by test method ANSI/ASTM D2765-68 of less than 20% which has been deformed at a temperature below the softening point of the material to produce heat-recoverable polymeric material having a thickness of at least 0.1 millimetres,

(b) forming a fusion bond between one or more parts of the first body and a further part or part of the first body or one or more parts of a second body of fusion bondable polymeric material to produce the configuration of at least one seam bonded heat-recoverable boot, udder or end cap, and

(c) cross-linking the recoverable boot, udder, or end cap and the bond between the deformed first body and the said further part(s) of the first body or the said part(s) of the second body, the cross-linked boot, udder or end cap having one or more openings to the exterior and being recoverable substantially only in the radial sense.

The invention also provides a seam bonded heat-recoverable boot, udder or end cap for electrical purposes comprising a first body of a polymeric material which has been deformed at a temperature below the softening point of the material to render the material heat-recoverable, one or more parts of the first body being fusion bonded to a further part or parts of the first body or to one or more parts of a second body of polymeric material with the bonded parts having a gel content as measured by test method ANSI/ASTM D2765-68 of less than 20% and the bond between the first body and the said further parts of the first body or the said parts of the second body being cross-linked, the deformed material having a thickness of at least 0.1 millimetres, and the bonded parts being in such arrangement that the boot, udder or end cap has at least one opening to the exterior and is heat-recoverable substantially only in the radial sense.

It is understood that references to "seam bonded " articles mean articles wherein two parts are seamed together by bonding in a manner somewhat analogous to sewing, and are specifically intended to exclude laminated and coextrusions in which a major surface of one layer is substantially wholly bonded to a major surface of another layer. Articles having bonds of relatively large surface areas are not, however, excluded provided that the article is clearly seamed together, for example as viewed from inside a hollow article which may be externally surrounded by a large bonded area, as in the case of two sheets bonded together to form a plurality of hollow articles with large bond areas between adjacent articles.

The bonding is effected by fusion of the said polymeric material, preferably in direct contact of the first body with the second body.

By the expression "fusion bonding" as employed herein is meant a process wherein the material in the parts to be bonded together is caused to flow to form the bond, e.g. welding by heat, solvent or ultrasonic of radio frequency energy, preferably with the application of pressure, either to form a bridge from the materials of the respective bodies or to fuse the parts with further material which is cross-linked with the material of the said parts by the cross-linking step of the process.

The bonding step may be effected either before or after the deformation step, preferably however after the deformation step. Bonding before deformation produces the configuration of the article before it is rendered heat recoverable, and care must be taken not to break the bond during the subsequent deformation. It will be understood that references to "hollow" articles include articles in a flat state which can be opened to reveal their hollow interior, and references to "tubular" articles include multi-legged, tapering, or irregular articles of a generally elongate hollow form, and these terms may refer to articles only art of which is hollow or tubular as aforesaid. The process is applicable to both crystalline and non-crystalline polymers, the softening point (by which is meant the crystalline melting point for crystalline polymers) being selected accordingly as the maximum deformation temperature.

By "fusion- bondable" polymeric materials and substrates as employed herein is meant not cross-linked, or cross-linked only to the extent that the material can still be readily bonded to itself or to another polymeric component by fusing. As set out in Claims 1 and 13, the level of cross-linking in the polymeric material expressed in terms of gel content (ANSI/ASTM D2765-68) is less than 20%, and is preferably less than 5%. When cross-linking in accordance with the process, preferably gel contents of at least 40%, e.g. at least 50%, particularly at least 65% are attained.

Preferably, the cross-linking cross-links substantially all of the polymeric material in addition to the bond-forming material. Cross-lining is preferably performed after the deforming and bonding steps, but could be effected after the deformation step during the bonding step. Of particular interest is a process wherein the second body to which part of the first body, in which case the first body may be in the form of a tube expanded radially by the deformation step, or may be a web which is expanded longitudinallu by the deformation step. Also of interest is a process wherein the second body to which part of the first body is bonded is initially separate from the first body, in which case both the first body and the second body may be in the form of a web and both may be longitudinally expanded by the deformation step. When both bodies are deformed, it is possible that the first body and the second body are bonded together so that the direction of deformation of the first body is at an angle to the direction of deformation of the second body.

In a further preferred process the deforming step locally deforms at least one substantial region of the first body, the second body is locally deformed in at least one substantial region at a temperature below the softening point of the material to render it heat recoverable, and the first body is bonded to the second body with their respective deformed regions cooperating with each other to produce hollow said article(s). Vacuum forming of a web of polymeric material is the preferred method of performing the localised deformation.

One advantage of the articles of the invention is that they are substantially recoverable, e.g. to at least 50% of their maximum extent, at a temperature below the softening point of the polymeric material from which they have been produced, e.g. in the range 60°C to the crystalline melting point or softening point.

The process is particularly useful in the manufacture of heat-recoverable boots, udders and end-caps for electrical applications, e.g. electrical cables, the use of such products being extensive and well reported in the literature e.g. Proc. IEE 1970j, 117(7), 1365 - 1372. Such products may, for example, be produced in accordance with the process of the invention by welding together at least two super-imposed flaps of a single folded pre-stretched and flattened polymeric tube. Such materials to be fused together may be disposed in accordance with any of the appropriate jointing techniques, e.g. to provide a lap joint or a butt joint. The polymeric material may be deformed in any direction which will provide the desired direction of recovery in the final product, which is preferably substantially only radially inward shrinkage in relation to the substrate to which they are applied, that is in the substantial absence of shrinkage longitudinally (e.g. less than 10% longitudinal shrinkage when fully radially recovered) in relation to said substrate. Such shrinkage may be achieved by non-axial deformation of the polymeric material.

The process of the present invention also lends itself to the production of such articles having parts thereof of different polymeric composition so that the properties of the article such as flexibility or electrical conductivity can be varied within a single article. For example, one part of an article such as the multiple legs of a cable udder may be produced as a single component by blow moulding techniques are employed, it is found that this may provide the necessary degree of deformation to impart heat-recoverability to the final article. The two parts are subsequently bonded together in the desired configuration.

In such a manner, the legs of the udder may, e.g. have semiconducting electrical characteristics and the cable inlet part insulating characteristics.

In the production of heat-recoverable articles in accordance with the invention, it is not always necessary to deform the whole of the polymeric starting material. For example, when employing polymeric material in the form of a web, it is possible locally to deform specific areas of the web, for example by pressing or by vacuum forming at an elevated temperature below the crystalline melting point or softening point of the material with subsequent cooling to maintain the deformed condition of the deformed components so formed. Such deformed components may then be fused to other components, for example to a similar component formed in a separate web, to produce the configuration of the desired product. Hollow heat recoverable articles produced in accordance with the process of the invention may advantageously be coated internally with an adhesive or other sealant, as described and claimed in U.K. Application No. 8024622 (EP-A-45212) e.g. an adhesive such as described in U.K. Patent No. 1,116,878. The application of the sealant may be effected before, during or after the process of the invention by appropriate choice of adhesive or sealant and process conditions. For example, a hot-melt adhesive may be applied to the polymeric material before the fusion step and thereafter the parts to be fused together locally heated and pressed together to locally displace the adhesive in the regions to be fused together.

Alternatively, the sealant may be applied after the bonding step and, where the process involves producing a plurality of separable articles, the sealant is preferably applied before separation of the articles.

If self-adhesion of sealant-coated contacting parts is a problem, then such parts may be separated by a non-adherable material such as release paper.

Any fusion bondable polymeric material which can be cross-linked by the cross-linking step (c) and to which the property of dimensional recoverability may be imparted such as those disclosed in U.K. Specification No. 990,235 may be used to form the articles. Polymers which may be used as the polymeric material include polyolefins such as polyethylene and polypropylene, and ethylene copolymers, for example with propylene, butene, hexene, octene, vinyl acetate or other vinyl esters or methyl or ethyl acrylate, polyamides, polyurethanes, polyvinyl chloride, polyvinylidine fluoride, or other fluorinated polymers or copolymers, e.g. Tefzel (trade name - commercially available from Dupont), elastomeric materials such as those disclosed in U.K. specification No. 1,010,064 and blends such as those disclosed in U.K. Specification Nos. 1,284,082 and 1,294,665, and compositions such as those disclosed in our U.S. Patent No. 4275180. The polymeric materials can be tailored to suit the intended use by the addition of fillers, e.g. semiconducting fillers or anti-tracking agents, flame retardants, plasticisers, pigments, stabilisers and lubricants, or where necessary, e.g. where the polymeric material is substantially non-crystalline, a hold-out agent such as a thermoplastic polymer, e.g. polyethylene, may be included in the material.

The polymeric material may be cross-linked by irradiation, for example, by means of an electron beam or by gamma radiation or it may be chemically cross-linked. Whichever cross-linking process is used, it may be advantageous to incorporate one or more co-curing agents for example polyunsaturated monomers such as triallyl cyanurate, triallyl isocyanurate, diallyl phthalate, ethylene glycol dimethacrylate, trimethylolpropane trimethacrylate, pentaerythritol tetramethacrylate, allyl methacrylate and vinyl methacrylate. One method of chemical crosslinking that may be used in the process according to the invention involves grafting an unsaturated hydrolysable silane on the polymer and subjecting the article to moisture during a curing stage, for example, as described in U.K. Patent specification Nos. 1,286,460 and 1,357,549.

Any of the techniques conventionally employed for fusing together polymeric materials may be employed in the process of the present invention, e.g. radio frequency, ultrasonic or hot bar welding, and pressure may additionally be applied to ensure a satisfactory bond. Furthermore, it is possible to make use of the fusing operation to separate the articles one from another or from surplus polymeric starting material. For example, it is possible to use a heating/cutting device such as a hot wire cutter or a laser beam, if necessary in association with pressure applying means such as a roller.

If the seam bonded heat-recoverable article is produced with an undesired protruding external weld, then this may be avoided by turning the article inside-out.

As hereinbefore described, the process produces hollow heat-recoverable articles for use in the electrical field, that is boots, udders and end-caps. In general, such products are characterised by a wall thickness prior to heat-recovery thereof of preferably from 0.1 to 5 mm, especially from 0.5 to 3 mm e.g. 1 to 3 mm.

Specific embodiments of the invention will now be described by way of example with specific reference to Figures 1 to 16 of the accompanying drawings wherein:

Figure 1 is a schematic top view of an assembly of separable heat-recoverable udders for the termination of an electrical cable,

Figure 2 is a diagramatic isometric view of an udder produced from the assembly shown in Figure 1,

Figure 3 is a schematic top view of an assembly of separable heat-recoverable boots employed for sealing an electrical cable at the termination thereof,

Figure 4 is a diagramatic isometric view of a boot produced from the assembly of Figure 3,

Figure 5 is a schematic top view of an alternative assembly of separable heat-recoverable boots from which the boot of Figure 4 may be produced,

Figure 6 is a schematic top view of an assembly of separable heat-recoverable end-caps employed for sealing the ends of electrical cables,

Figure 7 is an isometric view of an end cap produced from the assembly of Figure 6,

Figure 8 is a schematic top view of an assembly of separable heat-recoverable 4-legged udders,

Figure 9 is an isometric view of an udder produced from the assembly of Figure 8,

Figure 10 is an isometric top view of an alternative assembly of separable heat-recoverable 4-legged udders,

Figure 11 is an isometric view of an udder produced from the assembly on Figure 10,

Figure 12 is a schematic top view of an assembly of separable heat-recoverable boots,

Figure 13 is an isometric view of a boot produced from the assembly of Figure 12,

Figure 14 is a schematic isometric view of a polymeric web of material that has been locally deformed to produce boots analogous to that shown in Figure 13,

Figure 15 is an isometric view of a right angle electrical boot produced in analogous manner to that depicted in Figure 14, and

Figure 16 is an isometric view of a 2-legged udder produced in analogous manner to that depicted in Figure 14.

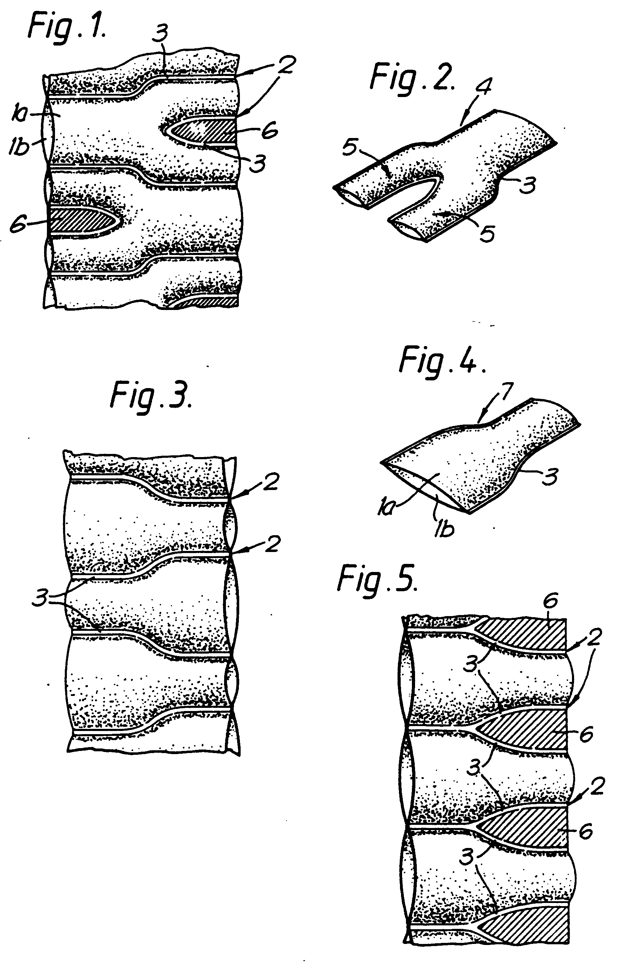

In the embodiment shown in Figures 1 and 2, a pair of polyethylene sheets 1a and 1b which have been expanded longitudinally to 3 times their original length at a temperature of 100°C and cooled whilst in the expanded condition, are superimposed one on the other and welded at positions 2 employing an ultrasonic welding tool to produce welded seams 3. The welded sheets are then irradiated in an electron beam at a dosage of 15 Mrads causing cross-linking of the polyethylene. After cross-linking the assembly is severed along the weld seams 3 employing a mechanical cutter to produce a plurality of heat-recoverable electrical udders 4 each having two legs 5 defined by the welds 3. The areas depicted by reference numeral 6 are discarded.

Such udders may be employed in the electrical termination of a cable comprising two primary wires by heat recovering the udder about the end of the cable, the primary wires passing through the legs of the udder.

In a modification (not shown) of the above embodiment the sheets are internally pre-coated with a sealant or adhesive such as a hot-melt adhesive before the welding stage. The sealant or adhesive selected is one that is relatively insensitive to the subsequent radiation treatment. Furthermore, the regions of the sheet to be welded together are locally pre-heated and pressed together by suitably located heated rollers engageable with the sheets causing the sealant or adhesive in the region to be welded to flow and be displaced immediately prior to the welding stage. The resulting product is thereafter treated in analogous manner to that described above.

In analogous manner to that described in relation to the first embodiment the transitions 7 and end-caps 8 shown in Figures 3, 4 and 5 and Figures 6 and 7 respectively are produced, hereinafter the same reference numerals being employed for analogous parts.

It may be advantageous to arrange the welds in end caps (and in other articles) to be tearable in order to facilitate removal of the article from a substrate onto which it has been heat-shrunk in use. In such arrangements the open end of the article may be shaped to provide a tab for convenient gripping to tear off the article.

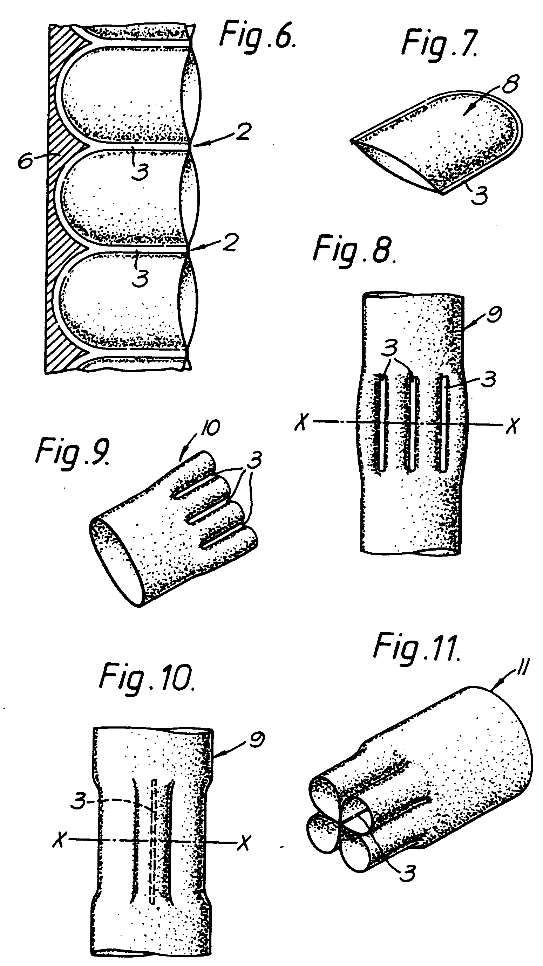

In the embodiment illustrated in Figures 8, 9, 10 and 11, two methods of producing 4-legged udders are depicted employing non-cross-linked polyethylene tubing 9 which has been radially expanded to three times its original diameter at a temperature of 100°C and cooled in the expanded condition. In the embodiment shown in Figures 8 and 9, the tubing is welded axially thereof to produce welded seams 3 which define the four legs of each udder, i.e. in a planar configuration, the tubing thereafter being irradiated with an electron beam as hereinbefore described and thereafter severed transversely thereof along the lines X-X.

In the embodiment shown in Figures 10 and 11 the tubing is welded axially thereof so as to produce welded seams 3 which define each udder in a cruciform configuration as shown in Figure 11.

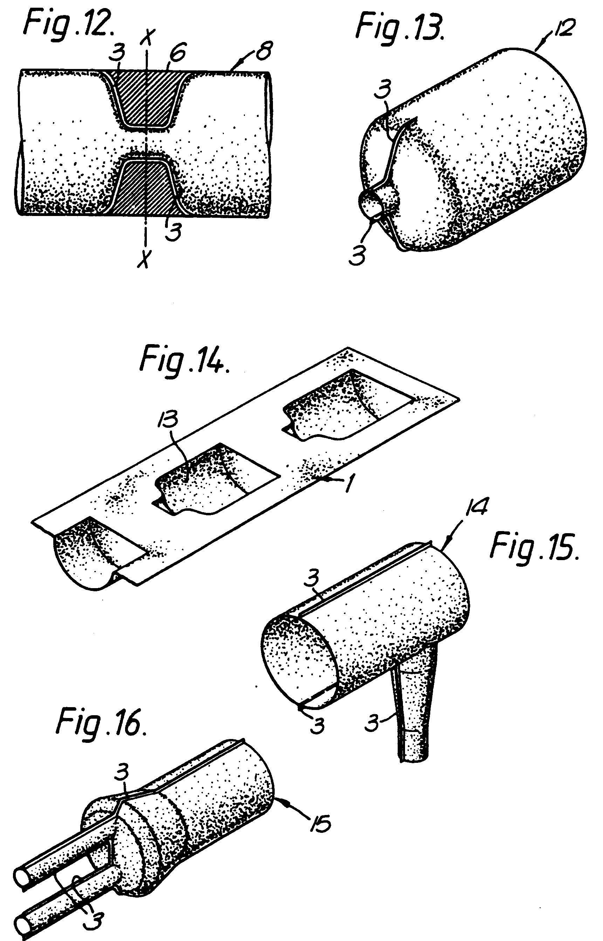

In the embodiment shown in Figures 12 and 13, electrical boots are produced from non-crosslinked radially expanded polyethylene tubing (produced as described in the preceding embodiment), the boots being profiled by welding to produce welded seams 3 and severing along the weld seams 3 to separate the boots from the superfluous regions 6. The profiled tube is then subjected to electron irradiation as hereinbefore described and subsequently severed transversely along the lines X-X to produce the individual boots as shown in Figure 13.

In the embodiment shown in Figure 14, an alternative method of producing the boots of Figure 11 is illustrated. In this embodiment a sheet of non-crosslinked non-expanded polyethylene 1 is heated to a temperature of 100°C and passed over a series of vacuum moulds. After application of vacuum, the sheet is impressed with a plurality of expanded areas 13 corresponding in shape to one half of the boot to be produced. After cooling, the sheet is removed from the mould and superimposed on a similarly processed sheet of complimentary form such that the half-boots of one sheet are in register with the half-boots of the other. Each complimentary and registering pair of half-boots are thereafter welded together and the whole boots so formed are separated from the surrounding area by severing along the welds 3 and also across the ends to produce the transitions in their final form as illustrated in Figure 13. The articles so formed are thereafter irradiated in an electron beam as hereinbefore described.

By employing appropriate vacuum moulds, the electrical boots of Figure 15 and the two legged udders of Figure 16 are produced. It will be seen that this method of forming the article of Figure 15 has the advantage that two axes of recovery can be produced in a single operation.

In each of the preceding embodiments, the wall thickness of the polyethylene after deformation may be 0.1 mm, 0.5 mm, 1.0 mm, 1.5 mm, 2.0 mm, 2.5 mm, 3.0 mm, 3.5 mm, 4.0 mm, 4.5 mm and 5.0 mm with similar results.

When as aforesaid an initially separate first body and second body are deformed and bonded together so that the direction of deformation of the first body is at an angle to the direction of deformation of the second body, preferably the first body is a tube, one end of which is bonded to a sheet (the second body), the latter preferably carrying means for closing opposable edges of the sheet together to form a tube lying at an angle to the first body tube.

The first and second bodies thus constitute two component parts of the article. By the direction of deformation of one component part being at an angle to the direction of deformation of another part, is meant that the respective directions of deformation, and hence the directions of recovery, of any two parts of the article, preferably two adjacent parts thereof, are not parallel along at least part of their common boundary if one exists. In most cases the directions of recovery will differ considerably, for example by an angle of between 45 and 135°C, and will often be substantially mutually perpendicular.

This aspect of the present invention is particularly suitable for the production of heat-recoverable articles of complex configurations, i.e. of non-uniform cross-sections, which have hitherto been formed by moulding. When articles are manufactured according to the present invention, it is often possible to form the component parts by extrusion, thereby dispensing with the relatively expensive moulding processes. Also, if the component parts are formed by extrusion, they may be expanded by in-line expansion techniques, for example they may be continuously expanded in the machine direction or in the transverse direction, or, if the component parts are extruded as a tube, the tube may be expanded pneumatically.

When the component parts are stretched before they are bonded together, it is not necessary to expand the formed articles on an item-by-item basis as is the case with moulded articles.

In many instances it is desirable to form a number of parts of the same general configuration but in which there are slight differences in configuration between the articles. For example a number of branch-outs may be required in which the side arms differ in number, in diameter or length, or in their position on the main sleeve. This type of variation may easily be accommodated in the process according to the invention by adjustment of the production machinery or in the selection of the component parts, whereas, as will be appreciated, such variations can be allowed by conventional production processes only by manufacturing a new mould for each variation.

It has surprisingly been found that it is possible to form bonds between the component parts that are sufficiently strong to withstand the recovery forces of the different parts at the recovery temperature of the polymeric material (about 120°C in the case of polyethylene) even though the direction of recovery of adjacent portions of the article differs along parts of the weld lines and the wall thickness of the polymeric material may be as high as 0.5 mm or higher, for example greater than 1 mm.

It is possible for different component parts of the article to formed from different polymeric materials or compositions so that the properties of the article such as flexibility or electrical conductivity can be waried within a single article.

For example one part may have semiconducting electrical characteristics while another part may have insulating characteristics.

In many cases it may be desirable to remove surplus polymeric material from one component part adjacent to the weld seam, in which case this is advantageously done in the same step as the welding operation. For example if a tubular side arm is to be welded on to a tubular sleeve forming the main body of a branch-out a corresponding aperture may be formed in the sleeve before or after the side arm is welded on but is preferably formed during welding. This may be achieved by suitably forming the welding equipment. Thus if the component parts are joined by a hot-plate welding method, the welding plate may have a heated raised profile which will cur through the polymeric material adjacent to the weld line.

If the component parts are formed by extrusion, they will, at some stage, need to be separated into individual pieces. In some instances it may be possible to separate the extrusion forming the component parts during, or even after, the welding step. For example a tubular article that is initially straight but will bend to form an "elbow" on recovery may be formed by superimposing an extruded sheet having direction of deformation in the machine direction upon an extruded sheet having a transverse direction of deformation, and welding together the longitudinally extending edges. The welded extruded product may then be cut into individual pieces.

This aspect of the process has the further advantage that it enables the production of certain forms of article that could not be manufactured by conventional production processes, such as articles of open configuration (e.g. in sheet form) in which different portions thereof have different directions of recovery. These forms of article are particularly suitable as wrap-around devices for enclosing bent substrates e.g. right angled bends in pipes, bus bars and the like, or branched substrates such as branches in pipes, cables, electrical harnesses and the like.

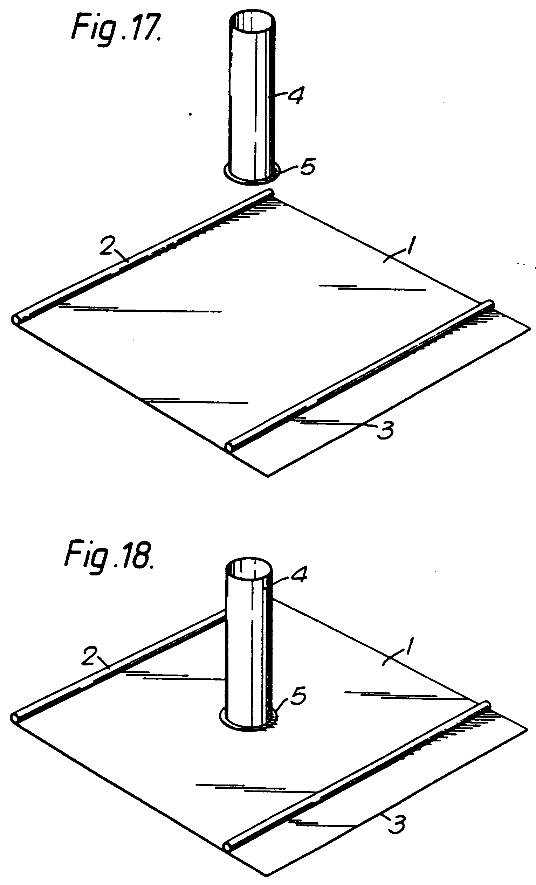

Dimensionally heat-recoverable articles comprising at least two parts having different directions of recovery, in accordance with the present invention, will now be described by way of example with reference to Figures 17 to 23 of the accompanying drawings in which:

Figures 17 and 18 show one form of wrap-around article before and after welding of the component parts;

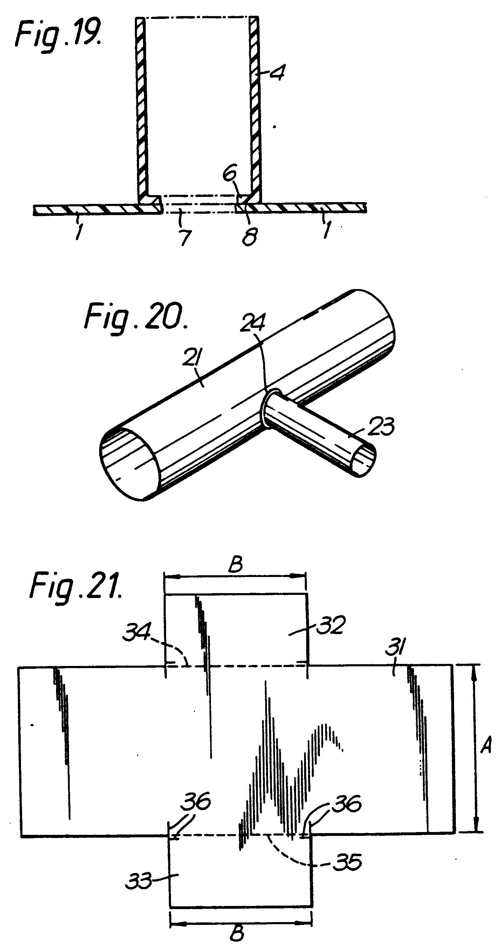

Figure 19 shows a modification of the article shown in Figure 18;

Figure 20 shows a tubular article formed in accordance with the invention; and

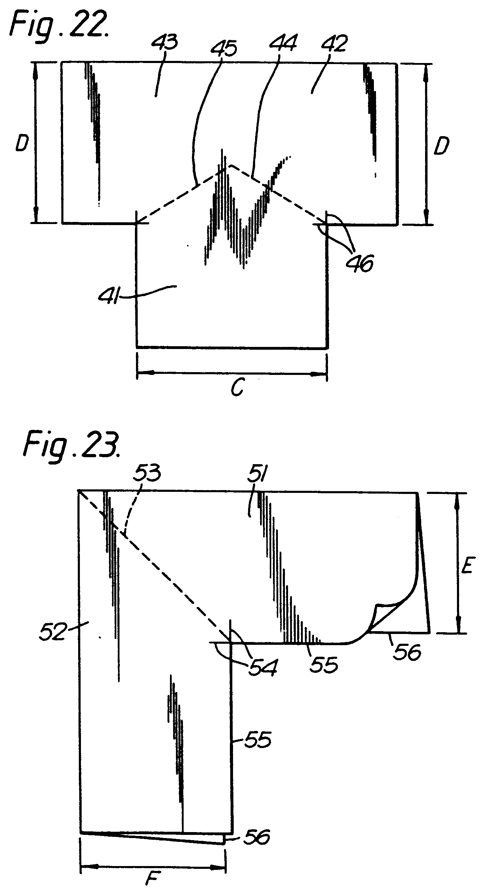

Figures 21 to 23 show three further forms of wrap-around article.

Referring to Figures 17 and 18 of the accompanying drawings, an article for enclosing a right-angled branch-out in a cable, for example a telephone cable comprises a sheet 1 that has been extruded and uniaxially stretched below the melting or softening point of the polymeric material in the transverse direction, that is, in a direction perpendicular to its edges 2 and 3. The sheet is provided with a mechanical wrap-around closure system as described in U.K. Patent Application No. 8024620. A tubular side arm or outlet 4 that has been pneumatically expanded in the radial direction at a temperature below the melting or softening point of the polymeric material is welded to the sheet 1 by forcing the wall at one end of the side arm 4 into an outwardly extending flange 5, positioning the side arm 4 at the appropriate point on the sheet 1, welding the flange 5 to the sheet 1 and forming an aperture in the sheet 1 at the end of the side arm 4. The aperture may be formed before the welding step if desired. After welding the polymeric material of the article is cross-linked by irradiation with 6 MeV electrons to a dose of about 10 Mrads.

The configuration of the article may be altered to suit any particular requirements if necessary, for example by altering the length or diameter of the side arm 4, by varying the position of the side arm 4 on the sheet 1 or by welding more than one side arm 4 onto the sheet 1.

Figure 19 is a cross-section through the sheet 1 and tubular side-arm 4 of an article similar to that shown in Figure 17 but in which, before welding, one end of the side-arm 4 has been deformed into an inwardly facing flange 6. In this embodiment an aperture 7 may be cut in the sheet 1 during formation of the weld 8 between the side arm 4 and the sheet 1.

It will be appreciated that the sheet 1 could be substantially non-heat-recoverable (e.g. less than 10% recovery) even semi-rigid, with one or more "side arm" tubes bonded to perforations therein, and cross-linked.

Figure 20 shows an article suitable for enclosing a branch out in a cable or electrical harness where the end of the cable or harness is readily accessible. The article comprises a tubular main-body 21 and a tubular side arm that are joined together by the methods described with reference to Figures 17 to 19 at a weld line 24. As will be appreciated, in the devices shown in Figures 17 to 20, the direction of recovery of the two parts will be parallel at some points along the weld line and will be mutually perpendicular at other points.

Figure 21 shows another form of wrap-around article suitable for enclosing a branch-out in an electrical cable or harness. The article is formed in a generally cruciform configuration and comprises a main body 31 that has been extruded and expanded in the direction of arrows A and has two side parts 32 and 33 that have also been extruded and have been expanded in the direction of arrows B, i.e. perpendicular to the direction of expansion of the body 31. After expansion the side parts 32 and 33 are welded to the main body 31 along weld lines 34 and 35 and the article is irradiated to a dose of about 10 Mrads of 6 Mev electrons to cross-link the polymeric material. Either before or after irradiation small incisions 36 may be made in the article so that the edges of the main body 31 and side portions 34 form flaps that can overlie each other when the article is installed.

In order to install the article, an adhesive for example an epoxy adhesive is applied along the appropriate edges of the main body 31 and side parts 32 and 33, and the main body is wrapped around the main line of the cable or harness so that the side parts 32 and 33 lie on opposite sides of the cable or harness branch. The edges of the main body 31 are bonded together and the edges of the side part 32 are bonded to the corresponding edges of the side part 33, after which the article may be heated by means of a hot-air gun or gas torch to recover it about the cable or harness.

Figure 22 shows another form of warp-around device that is particularly suitable for enclosing right-angled bends or "elbows" in objects such as electrical bus bars. The device has a generally "T" configuration and comprises part 41 having a direction of stretching indicated by arrows C and parts 42 and 43 having a direction of stretching indicated by arrows D, the parts 42 and 43 being welded to part 41 along the weld seams 44 and 45 respectively. Incisions 46 are made in the polymeric material to allow the edges of parts 41, 42 and 43 to be bonded and the article is irradiated by high energy electrons to cross-link the polymeric material.

The device may be installed by applying an epoxy adhesive to the edges, positioning it about the "T" and heating it as described above.

Figure 23 shows a further form of device suitable for enclosing right-angled bends in bus-bars. This device has been formed by stretching non-cross-linked sheet and folding the sheet perpendicular to the direction of stretching. One end of each portion of folded sheet is cut along a line 53 at an angle of 45° to the fold and two portions of the sheet are welded together along the said line so that the device is substantially "L" shaped as shown in the drawing and comprises two parts 51 and 52 having directions of stretch indicated by arrows E and F. Incisions 54 are made in the device to enable the edges 55 to be bonded to the edges 56 by an adhesive. The device is irradiated to a dose of 10 Mrads of 6 MeV electrons and can then be installed as described above.

In all embodiments of this invention, the fact that the polymeric material is cross-linked after the article has been assembled enables it to be cross-linked by irradiation, thereby reducing the time taken for cross-linking, obviating the necessity to incorporate peroxide or other chemical curing agents in the material, and strengthening the bonded regions. The latter feature is particularly significant when the first and second bodies have been bonded together by fusion and results in strong cross-linked bonded regions. The fusion bonding is preferably carried out under such pressure and other conditions as will cause a bead of fused material to be exuded along the edge of the bonded seam, thus indicating a high degree of flow of the bond material to enhance the effectiveness of the bonding.

# Claims

1. A process for the production of a heat-recoverable boot, udder or end cap for electrical purposes having a thickness of at least 0.1 millimetres which comprises:

(a) providing a first body of fusion bondable polymeric material having a gel content as measured by test method ANSI/ASTM D2765-68 of less than 20% which has been deformed at a temperature below the softening point of the material to produce heat-recoverable polymeric material having a thickness of at least 0.1 millimetres,

(b) forming a fusion bond between one or more parts of the first body and a further part or parts of the first body or one or more parts of a second body of fusion bondable polymeric material to produce the configuration of at least one seam bonded heat-recoverable boot, udder or end cap, and

(c) cross-linking the recoverable boot, udder, or end cap and the bond between the deformed first body and the said further part(s) of the first body or the said part(s) of the first body or the said part(s) of the second body, the cross-linked boot, udder or end cap having one or more openings to the exterior and being recoverable substantially only in the radial sense.

2. A process according to claim 1, wherein the said further part(s) of the first body or the said part(s) of the second body have been deformed at a temperature below the softening point of the material to render the material heat-recoverable and the bonded parts are arranged so that the direction of radial recovery of the first body is at an angle to the direction of radial recovery of the said further part(s) of the first body or the said part(s) of the second body.

3. A process according to claim 1 or 2 wherein the bond-forming material includes further material in addition to the first body and the second body if present and the cross-linking cross-links the said further material with that of the first body and the second body.

4. A process according to claim 2, wherein the first body is a tube one end of which is bonded to a main surface of a sheet or tubular second body which has been deformed as stated for the first body so that the direction of radial recovery of the first body is at angle to the direction of radial recovery of the second body.

5. A process according to claim 4 wherein the tube is bonded to a sheet second body which carries closure means for closing opposable edges of the sheet together to form a tube lying at an angle to the first body tube.

6. A process according to any of claims 1 to 3, wherein the first body has been locally deformed in at least one region to render it heat-recoverable, the second body has been locally deformed in at least one region at a temperature below the softening point of the material to render it heat-recoverable, and the first body is bonded to the second body with their respective deformed regions cooperating with each other to produce one or more boots, udders, or end caps.

7. A process according to any of the preceding claims wherein the polymeric material after deformation has a wall thickness in the range from 0.1 to 5.0 millimetres.

8. A process according to any of the preceding claims which is carried out continuously on a continuous first body or first and second bodies of polymeric material.

9. A process according to any of the preceding claims which produces a train of interconnected boots, udders, or end caps.

10. A process according to any of the preceding claims wherein the cross-linking is effected by means of ionising radiation.

11. A process according to any of the preceding claims which includes the step of deforming the first body and/or the second body if present at a temperature below the softening point of the material to produce heat-recoverable polymeric material.

12. A process according to any of claims 1 to 3 wherein the first body is bonded to a second body which is substantially non-heat-recoverable.

13. A seam bonded heat-recoverable boot, udder or end cap for electrical purposes comprising a first body of a polymeric material which has been deformed at a temperature below the softening point of the material to render the material heat-recoverable, one or more parts of the first body being fusion bonded to a further part or parts of the first body or to one or more parts of a second body of polymeric material with the bonded parts having a gel content as measured by test method ANSI/ASTM D2765-68 of less than 20% and the bond between the first body and the said further parts of the first body or the said parts of the second body being cross-linked, the deformed material having a thickness of at least 0.1 millimetres, and the bonded parts being in such arrangement that the boot, udder or end cap has at least one opening to the exterior and is heat-recoverable substantially only in the radial sense.

14. A boot, udder or end cap according to claim 13, the bonded parts having been deformed at a temperature below the softening point of the material to render the material heat-recoverable and being bonded together so that the direction of radial recovery of the first body is at an angle to the direction of radial recovery of the said further part(s) of the first body or the said part(s) of the second body.

15. A boot, udder or end cap according to claim 13 wherein the first body and a second body have each been locally deformed in at least one region at a temperature below the softening point of the material to render the material heat-recoverable and are bonded to each other with their respective deformed regions co-operating with each other to provide one or more boots, udders or end caps.

16. A boot, udder or end cap according to any of claims 13 to 15 wherein the polymeric material in the deformed state has a thickness within the range of from 0.1 to 5.0 millimetres.

17. A boot, udder or end cap according to claim 13 wherein the first body is bonded to a second body which is substantially non-heat-recoverable.

10. A train of interconnected boots, udders or end caps according to any of claims 13 to 17.

**Patentansprüche**

1. Verfahren zur Herstellung einer wärmerückstellbaren Muffe, eines solchen Verbindungsteils mit mehreren Auslässen (Udder) oder einer solchen Endkappe für elektrische Zwecke mit einer Dicke von wenigstens 0,1 mm, wobei das Verfahren aufweist:

(a) Vorsehen.eines ersten Körpers von schmelzverbindbarem polymerem Material, das, gemessen nach der Testmethode ANSI/ASTM D2765-68, einen Gelgehalt von weniger als 20 % hat, wobei der Körper bei einer Temperatur unterhalb des Erweichungspunkts des Materials verformt worden ist, um ein wärmerückstellbares polymeres Material mit einer Dicke von wenigstens 0,1 mm herzustellen,

(b) Bilden einer Schmelzverbindung zwischen einem oder mehreren Teilen des ersten Körpers und einem weiteren Teil oder weiteren Teilen des ersten Körpers oder einem oder mehreren Teilen eines zweiten Körpers von schmelzverbindbarem polymerem Material, um die Form wenigstens einer nahtverbundenen wärmerückstellbaren Muffe, eines solchen Verbindungsteils mit mehreren Auslässen oder einer solchen Endkappe herzustellen, und

(c) Vernetzen der rückstellbaren Muffe, des rückstellbaren Verbindungsteils mit mehreren Auslässen oder der rückstellbaren Endkappe und der Verbindung zwischen dem verformten ersten Körper und dem genannten weiteren Teil bzw. den genannten weiteren Teilen des ersten Körpers oder dem genannten Teil bzw. den genannten Teilen des ersten Körpers oder dem genannten Teil bzw. den genannten Teilen des zweiten Körpers, wobei die vernetzte Muffe, das vernetzte Verbindungsteil mit mehreren Auslässen oder die vernetzte Endkappe eine oder mehrere Öffnungen nach außen hat und im wesentlichen nur in Radialrichtung rückstellbar ist.

2. Verfahren nach Anspruch 1, wobei der weitere Teil bzw. die weiteren Teile des ersten Körpers oder der genannte Teil bzw. die genannten Teile des zweiten Körpers bei einer Temperatur unterhalb des Erweichungspunkts des Materials verformt worden sind, um das Material wärmerückstellbar zu machen, und die verbundenen Teile so angeordnet sind, daß die Richtung der radialen Rückstellung des ersten Körpers unter einem Winkel zu der Richtung der radialen Rückstellung des genannten weiteren Teils bzw. der genannten weiteren Teile des ersten Körpers oder des genannten Teils bzw. der genannten Teile des zweiten Körpers verläuft.

3. Verfahren nach Anspruch 1 oder 2, wobei das verbindungsbildende Material ein weiteres Material zusätzlich zu dem ersten Körper und zu dem zweiten Körper, falls vorhanden, enthält und die Vernetzung das genannte weitere Material mit dem des ersten Körpers und des zweiten Körpers vernetzt.

4. Verfahren nach Anspruch 2, wobei der erste Körper ein Rohr ist, dessen eines Ende mit einer Hauptfläche eines Flächenkörpers oder eines rohrförmigen zweiten Körpers verbunden ist, der, wie beim ersten Körper angegeben, verformt worden ist, so daß die Richtung der radialen Rückstellung des ersten Körpers unter einem Winkel zu der Richtung der radialen Rückstellung des zweiten Körpers verläuft.

5. Verfahren nach Anspruch 4, wobei das Rohr mit einem flächenhaften zweiten Körper verbunden wird, der eine Verschlußeinrichtung zum Zusammenschließen von gegenüberstellbaren Ränder des Flächenkörpers trägt, um ein Rohr zu bilden, das unter einem Winkel zu dem ersten Rohrkörper liegt.

6. Verfahren nach einem der Ansprüche 1 bis 3, wobei der erste Körper in wenigstens einem Bereich lokal verformt worden ist, um ihn wärmerückstellbar zu machen, der zweite Körper in wenigstens einem Bereich bei einer Temperatur unterhalb des Erweichungspunkts des Materials lokal verformt worden ist, um ihn wärmerückstellbar zu machen, und der erste Körper mit dem zweiten Körper unter Zusammenwirken ihrer jeweiligen verformten Bereiche verbunden ist, um eine oder mehrere Muffen, Verbindungsteile mit mehreren Auslässen oder Endkappen herzustellen.

7. Verfahren nach einem der vorhergehenden Ansprüche, wobei das polymere Material nach Verformung eine Wanddicke im Bereich von 0,1-5,0 mm hat.

8. Verfahren nach einem der vorhergehenden Ansprüche, das kontinuierlich an einem fortlaufenden ersten Körper oder ersten und zweiten Körpern von polymerem Material durchgeführt wird.

9. Verfahren nach einem der vorhergehenden Ansprüche, das eine Kette von zusammenhängenden Muffen, Verbindungsteilen mit mehreren Auslässen oder Endkappen herstellt.

10. Verfahren nach einem der vorhergehenden Ansprüche, wobei die Vernetzung mit Hilfe von ionisierender Strahlung bewirkt wird.

11. Verfahren nach einem der vorhergehenden Ansprüche, das den Schritt des Verformens des ersten Körpers und/oder gegebenenfalls des zweiten Körpers bei einer Temperatur unterhalb des Erweichungspunkts des Materials aufweist, um wärmerückstellbares polymeres Material herzustellen.

12. Verfahren nach einem der Ansprüche 1 bis 3, wobei der erste Körper mit einem zweiten Körper verbunden ist, der im wesentlichen nicht wärmerückstellbar ist.

13. Nahtverbundene wärmerückstellbare Muffe, ein solches Verbindungsteil mit mehreren Auslässen (Udder) oder eine solche Endkappe für elektrische Zwecke, die einen ersten Körper aus einem polymeren Material aufweist, der bei einer Temperatur unterhalb des Erweichungspunkts des Materials verformt worden ist, um das Material wärmerückstellbar zu machen, wobei ein oder mehrere Teile des ersten Körpers mit einem weiteren Teil bzw. weiteren Teilen des ersten Körpers oder mit einem oder mehreren Teilen eines zweiten Körpers von polymerem Material schmelzverbunden sind, wobei die verbundenen Teile, gemessen nach der Testmethode ANSI/ASTM D2765-68, einen Gelgehalt von weniger als 20 % haben und die Verbindung zwischen dem ersten Körper und den genannten weiteren Teilen des ersten Körpers oder den genannten Teilen des zweiten Körpers vernetzt ist, das verformte Material eine Dicke von wenigstens 0,1 mm hat und die verbundenen Teile so angeordnet sind, daß die Muffe, das Verbindungsteil mit mehreren Auslässen oder die Endkappe wenigstens eine Öffnung nach außen hat und im wesentlichen nur in Radialrichtung wärmerückstellbar ist.

14. Muffe, Verbindungsteil mit mehreren Auslässen oder Endkappe nach Anspruch 13, wobei die verbundenen Teile bei einer Temperatur unterhalb des Erweichungspunkts des Materials verformt worden sind, um das Material wärmerückstellbar zu machen, und miteinander so verbunden sind, daß die Richtung der radialen Rückstellung des ersten Körpers unter einem Winkel zu der Richtung der radialen Rückstellung des genannten weiteren Teils bzw. der genannten weiteren Teile des ersten Körpers oder des genannten Teils bzw. der genannten Teile des zweiten Körpers verläuft.

15. Muffe, Verbindungsteil mit mehreren Auslässen oder Endkappe nach Anspruch 13, wobei der erste Körper und ein zweiter Körper jeweils lokal in wenigstens einem Bereich bei einer Temperatur unterhalb des Erweichungspunkts des Materials verformt worden sind, um das Material wärmerückstellbar zu machen, und unter Zusammenwirken ihrer jeweiligen verformten Bereiche miteinander verbunden sind, um eine oder mehrere Muffen, Verbindungsteile mit mehreren Auslässen oder Endkappen zu bilden.

16. Muffe, Verbindungsteil mit mehreren Auslässen oder Endkappe nach einem der Ansprüche 13 bis 15, wobei das polymere Material im verformten Zustand eine Dicke im Bereich von 0,1-5,0 mm hat.

17. Muffe, Verbindungsteil mit mehreren Auslässen oder Endkappe nach Anspruch 13, wobei der erste Körper mit einem zweiten Körper verbunden ist, der im wesentlichen nicht wärmerückstellbar ist.

18. Kette von zusammenhängenden Muffen, Verbindungsteilen mit mehreren Auslässen oder Endkappen nach einem der Ansprüche 13 bis 17.

**Revendications**

1. Procédé de production d'un manchon, d'une coiffe à sorties multiples ou d'un capuchon doué de reprise dimensionnelle à chaud, destiné à des applications électriques, ayant une épaisseur d'au moins 0,1 mm, qui consiste :

(a) à produire un premier corps constitué d'une matière polymérique, pouvant être liée par fusion, ayant une teneur en gel, telle qu'elle est mesurée par le procédé d'essai ANSI/ASTM D2765-68, inférieure à 20%, qui a été déformé à une température inférieure au point de ramollissement de la matière pour produire une matière polymérique douée de reprise dimensionnelle à chaud ayant une épaisseur d'au moins 0,1 mm,

(b) à former une liaison par fusion entre une ou plusieurs parties du premier corps et une ou plusieurs parties supplémentaires du premier corps ou bien une ou plusieurs parties d'un second corps de matière polymérique pouvant être liée par fusion pour produire la configuration d'au moins le manchon, une coiffe à sorties multiples ou un capuchon doué de reprise dimensionnelle à chaud, liée par soudure, et

(c) à réticuler le manchon, la coiffe à sorties multiples ou le capuchon doué de reprise dimensionnelle et la liaison entre le premier corps déformé et ladite ou lesdites parties supplémentaires du premier corps ou ladite ou lesdites parties du premier corps ou bien ladite ou lesdites parties du second corps, le manchon, la coiffe à sorties multiples ou le capuchon réticulé ayant un ou plusieurs orifices communiquant avec l'extérieur et étant doué de reprise dimensionnelle pratiquement seulement dans la direction radiale.

2. Procédé suivant la revendication 1, dans lequel la ou les parties supplémentaires du premier corps ou la ou les parties du second corps ont été déformées à une température inférieure au point de ramollissement de la matière pour rendre la matière douée de reprise dimensionnelle à chaud et les parties liées sont disposées de sorte que la direction de reprise dimensionnelle radiale du premier corps fasse un angle avec la direction de reprise dimensionnelle radiale de ladite ou desdites parties supplémentaires du premier corps ou de ladite ou desdites parties du second corps.

3. Procédé suivant la revendication 1 ou 2, dans lequel la matière formant la liaison comprend une matière supplémentaire en plus du premier corps et du second corps, s'il est présent, et l'opération de réticulation provoque la réticulation de ladite matière supplémentaire avec celle du premier corps et du second corps.

4. Procédé suivant la revendication 2, dans lequel le premier corps est un tube dont une extrémité est liée à une surface principale d'une feuille ou d'un second corps tubulaire qui a été déformé de la manière indiquée pour le premier corps de sorte que la direction de reprise dimensionnelle radiale du premier corps fasse un angle avec la direction de reprise dimensionnelle radiale du second corps.

5. Procédé suivant la revendication 4, dans lequel le tube est lié à un second corps sous forme de feuille qui porte des moyens d'obturation pour clore ensemble les bords opposables de la feuille pour former un tube faisant un angle avec le premier corps tubulaire.

6. Procédé suivant l'une quelconque des revendications 1 à 3, dans lequel le premier corps a été localement déformé dans au moins une zone pour rendre ce corps doué de reprise dimensionnelle à chaud, le second corps a été localement déformé dans au moins une zone à une température inférieure au point de ramollissement de la matière pour rendre ce corps doué de reprise dimensionnelle à chaud, et le premier corps est lié au second corps avec leurs zones déformées respectives coopérant l'une avec l'autre pour produire un ou plusieurs manchons, une ou plusieurs coiffes à sorties multiples ou un ou plusieurs capuchons.

7. Procédé suivant l'une quelconque des revendications précédentes, dans lequel la matière polymérique, après déformation, possède une épaisseur de paroi de 0,1 à 5,0 mm.

8. Procédé suivant l'une quelconque des revendications précédentes, qui est mis en oeuvre en continu sur un premier corps continu ou des premier et second corps de matière polymérique.

9. Procédé suivant l'une quelconque des revendications précédentes, qui permet de produire un train de manchons, coiffes à sorties multiples ou capuchons interconnectés.

10. Procédé suivant l'une quelconque des revendications précédentes, dans lequel la réticulation est effectuée au moyen d'un rayonnement ionisant.

11. Procédé suivant l'une quelconque des revendications précédentes, qui comprend l'étape de déformation du premier corps et/ou du second corps, s'il est présent, à une température inférieure au point de ramollissement de la matière pour produire une matière polymérique douée de reprise dimensionnelle à chaud.

12. Procédé suivant l'une quelconque des revendications 1 à 3, dans lequel le premier corps est lié à un second corps qui est pratiquement non doué de reprise dimensionnelle à chaud.

13. Manchon, coiffe à sorties multiples ou capuchon doué de reprise dimensionnelle à chaud, lié en cordon, destiné à des applications électriques, comprenant un premier corps d'une matière polymérique qui a été déformée à une température inférieure au point de ramollissement de la matière pour rendre la matière douée de reprise dimensionnelle à chaud, une ou plusieurs parties du premier corps étant liées par fusion à une ou plusieurs parties supplémentaires du premier corps ou bien à une ou plusieurs parties d'un second corps de matière polymérique, les parties liées ayant une teneur en gel, telle qu'elle est mesurée par le procédé d'essai ANSI/ASTM D2765-68, inférieure à 20%, et la liaison entre le premier corps et lesdites parties supplémentaires du premier corps ou lesdites parties du second corps étant réticulées, la matière déformée ayant une épaisseur d'au moins 0,1 mm, et les parties liées étant disposées de telle sorte que le manchon, la coiffe à sorties multiples ou le capuchon possède au moins un orifice communiquant avec l'extérieur et soit doué de reprise dimensionnelle à chaud pratiquement seulement dans la direction radiale.

14. Manchon, coiffe à sorties multiples ou capuchon suivant la revendication 13, dont les parties liées ont été déformées à une température inférieure au point de ramollissement de la matière pour rendre la matière douée de reprise dimensionnelle à chaud et ont été liées les unes aux autres de sorte que la direction de reprise dimensionnelle radiale du premier corps fasse un angle avec la direction de reprise dimensionnelle radiale de ladite ou lesdites parties supplémentaires du premier corps ou de ladite ou lesdites parties du second corps.

15. Manchon, coiffe à sorties multiples ou capuchon suivant la revendication 13, dans lequel le premier corps et un second corps ont été chacun localement déformés dans au moins une zone à une température inférieure au point de ramollissement de la matière pour rendre la matière douée de reprise dimensionnelle à chaud et sont liés l'un à l'autre, avec leurs zones déformées respectives coopérant les unes avec les autres pour produire un ou plusieurs manchons, coiffe à sorties multiples ou capuchons.

16. Manchon, coiffe à sorties multiples ou capuchon suivant l'une quelconque des revendications 13 à 15, dans lequel la matière polymérique à l'état déformé possède une épaisseur de 0,1 à 5,0 mm.

17. Manchon, coiffe à sorties multiples ou capuchon suivant la revendication 13, dans lequel le premier corps est lié à un second corps qui est pratiquement non doué de reprise dimensionnelle à chaud.

18. Train de manchons, coiffes à sorties multiples ou capuchons interconnectés suivant l'une quelconque des revendications 13 à 17.

Fig.1.

Fig.2.

Fig.3.

Fig.4.

Fig.5.

Fig.6.

Fig.7.

Fig.8.

Fig.9.

Fig.10.

Fig.11.

14

Fig.12.

Fig.13.

Fig.14.

Fig.15.

Fig.16.

Fig.17.

Fig.18.

Fig.19.

Fig.20.

Fig.21.

Fig.22.

Fig.23.